# FASCICULE DE BREVET EUROPEEN

(11) **EP 0 894 847 B1**
(45) Date de publication et mention de la délivrance du brevet: **29.12.2004**
(21) Numéro de dépôt: 98500176.7
(22) Date de dépôt: 24.07.1998
(51) Int. Cl.: C10M 175/04, B01D 17/04, B01D 17/06

(54) **Procédé de traitement d'huiles usagées de refroidissement**
Verfahren zur Aufarbeitung von Kühlaltölen
Process for reclaiming used oil coolants

(30) Priorité: 31.07.1997 ES 9701701
(43) Date de publication de la demande: 03.02.1999
(73) Titulaire: Aerospatiale Matra Airbus, 75016 Paris (FR); Fundacion Inasmet, 20009 San Sebastian (Guipuzcoa) (ES); S.A. De Descontaminacion y Eliminacion de Residuos Sader, 48013 Zorroza-Bilbao (Vizcaya) (ES)
(72) Inventeur: Otaola Gonzalez, Jose Maria, 48013 Zorroza-Bilbao, Vizcaya (ES); Alava Marquinez, Inaki, 20009 San Sebastian, Guipuzcoa (ES); Ipinazar Alonso, Enrique, 20009 San Sebastian, Guipuzcoa (ES); Mugica Iraola, Juan Carlos, 20009 San Sebastian, Guipuzcoa (ES); Solozabal Echevarria, Rodolfo, 20009 San Sebastian, Guipuzcoa (ES)
(74) Mandataire: Carpintero Lopez, Francisco

(56) Documents cités:
- BE-A- 625 375
- DE-A- 3 739 580
- DE-A- 4 126 914
- DE-A- 4 230 765
- FR-A- 1 587 830
- US-A- 4 081 338

## Description

Les huiles de refroidissement employées à ce jour sont de caractéristiques très différentes et l'objet de l'invention se réfère de manière préférentielle aux huiles de refroidissement semi-synthétiques, synthétiques et aux mélanges d'huiles de refroidissement dans lesquelles entrent les huiles semi-synthétiques et/ou synthétiques.

Lorsque l'on a utilisé ces huiles de refroidissement, se pose le problème tellement à l'ordre du jour de savoir ce que l'on va en faire, comment les traiter pour qu'elles ne polluent pas, comment les recycler, etc., etc. Des procédés de traitement d'huiles usagées sont décrits dans les demandes DE-A-4230765, US-A-4081338, DE-A-4126914, FR-A-1587830, DE-A-3739580 ou BE-A-625 375.

Les huiles de refroidissement auxquelles s'applique le procédé de l'invention contiennent :
- une émulsion d'eau-huile;
- une dissolution d'eau-composés organiques;
- des agents émulsionnants.

Le procédé de l'invention permet à partir des huiles de refroidissement usagées :
- de séparer l'huile pour un usage postérieur
- d'obtenir un reste fangeux aisé à éliminer.
- d'obtenir de l'eau faiblement polluée et potentiellement réutilisable.

La présente invention préconise un procédé de traitement d'huiles usagées de refroidissement contenant une émulsion eau-huile et une dissolution eau-composés organiques, qui se caractérise par le fait de se composer des phases consécutives suivantes :
a) à l'huile de refroidissement on rajoute un alcali ou un acide jusqu'à obtenir un pH de : pH ≤ 3 ou pH ≥ 10, et au moyen de deux électrodes on la soumet à un courant de tension (V) : 10 v ≤ V ≤ 20 v, intensité (i): 15 A. ≤ i ≤ 25 A., densité de courant (I/A) : 1 A./dm² ≤ I/A ≤ 5 A/dm² et consommation ( C) 15 Wh/P ≤ C ≤ 25 Wh/P l'émulsion devenant instable, ce qui permet que soit retirée l'huile flottante;
b) en rajoutant au liquide restant, du chlorure de fer Cl₂Fe en quantité de 1 à 3 g./l. et en le soumettant, au moyen de deux électrodes, à un courant de tension (V): 9 ≤ V ≤ 14 v, densité de courant (I/A) ≥ 4 A/dm² et consommation ( C):60 Wh/P ≤ C ≤ 100 Wh/P en obtenant ainsi un pH final de pH ≤ 3 ou pH ≥ 10, pour procéder à
c) son alcalinisation pour arriver à un pH de 8 ≤ pH ≤ 9 grâce à quoi on obtient un précipité fangeux qui est retiré et de l'eau légèrement polluée par de l'huile et des composés organiques, ayant par exemple des contenus en huiles inférieurs à 250 ppm.

La base théorique des aboutissements de ce procédé réside en :
- formation d'ions oxydants supérieurs
- meilleure réactivité et efficacité du Fe⁺⁺⁺ qui vient de se former
- meilleur dosage et rendement du Fe⁺⁺⁺

Dans le procédé ceci peut se mettre en oeuvre soit en continu soit en cuves indépendantes avec les transvasements correspondants. Afin de faciliter la compréhension, nous donnons ci-après une explication du processus en continu.

Le procédé se compose de trois étapes différenciées :

Lors de la première étape, on dispose une cellule ayant deux électrodes connectées à un redresseur, lequel administre un courant de 10 ≤ V ≤ 20 v et de faible intensité, par exemple 20 amp., ce qui donne lieu à une intensité de courant I/A de : 1 à 5 A./dm² pour une consommation ( C): 15 Wh/P ≤ C ≤ 25 WH/P.

L'anode est de préférence en plomb (Pb) ou dans d'autres matériaux appropriés et la cathode en acier inoxydable ou en titane (Ti).

On introduit dans la cuve l'huile usagée de refroidissement, qui se compose d'une émulsion eau-huile, une dissolution d'eau-composés organiques, par exemple, polyglycols et agents émulsionnants.

On rajoute un alcali ou un acide pour parvenir à ce que le pH atteigne des valeurs de : pH ≤ 3 ou pH ≥ 10.

Dans cette première étape on parvient à rompre l'émulsion eau-huile et l'on arrive ainsi à séparer l'eau et l'huile (dans un fort pourcentage) qui flotte. L'huile peut être retirée avec facilité en vue de l'usage postérieur que l'on croit opportun.

On est parvenu de la sorte au premier objectif recherché par l'invention.

Dans une seconde étape, le liquide restant est introduit dans une cuve, qui peut être la même cuve de la première phase, en changeant les électrodes.

On rajoute du chlorure de fer Cl₂Fe en quantité de 1 à 3 g./l., le pH dans la cuve étant moins acide ou moins alcalin qu'au début de là première phase et de préférence pH ≃ 4 ou pH ≃ 9.

Le régime électrique sur les électrodes sera d'une tension (V) de : 9 à 14 volts et une densité de courant (I/A) ≥ 4 A/dm² et une consommation (C) : 60 Wh/P ≤ C ≤ 100 Wh/P, en obtenant de la sorte un pH de sortie : pH ≤ 3 ou pH ≥ 10.

Dans une troisième phase, le liquide s'alcalinise, par exemple en utilisant CaO, NaOH ou un autre alcali, pour atteindre un pH ≃ 8 à 9, ce qui permet de précipiter les sels de fer (Fe), la majorité des composants organiques et la plus grande partie de l'huile qui est restée dans le liquide après la première phase.

Le précipité est un résidu fangeux qui peut être retiré facilement et le liquide résultant est de l'eau légèrement polluée, dont les exigences environnementales sont inférieures à celles exigées par les normes applicables à cet égard.

### Exemple :

La DQO est un indice servant à mesurer la présence de composants organiques.

On a une huile usée de refroidissement ayant une DQO (demande chimique en oxygène) de 25000 mg./l, pour des huiles : 17500 mg./l. Dans une première phase, on introduit l'huile usagée de refroidissement dans une cuve ayant des électrodes en Pb et acier inoxydable.

On rajoute de l'acide sulfurique SO4H2 jusqu'à atteindre un pH ≃ 3.

Le régime de courant électrique est de tension (V) = 15 volts, intensité (I) = 20 A, densité de courant (I/A) = 3 A./dm2 et l'on consomme 20 Wh/P.

On obtient une émulsion instable avec DQO = 17000 mg./l., l'huile flotte et on la retire.

On ajoute au reste, dans une seconde phase 3 g./l, de Cl₂Fe, le régime électrique de tension (V) étant = 10 volts, intensité (I) = 100 A., densité de courant (I/A) = 5 A/dm2 et l'on consomme 80 Wh/P, le pH de sortie étant : pH = 3.

Lors de la troisième phase on rajoute de la chaux CaO jusqu'à atteindre un pH = 8;5, pour obtenir comme précipité une boue que l'on retire, et de l'eau légèrement polluée par les huiles < 500 mg/l et une DQO = 9000 mg/l.

## Revendications

1. Procédé de traitement d'huiles usagées de refroidissement contenant une émulsion eau-huile et une dissolution d'eau-composés organiques, **se caractérisant par le fait qu'**elle se compose des phases consécutives suivantes :
a) à l'huile de refroidissement on rajoute un alcali ou un acide jusqu'à obtenir un pH de : pH ≤ 3 ou pH ≥ 10, et au moyen de deux électrodes on la soumet à un courant de tension (V) : 10 v ≤ V ≤ 20 v intensité (i): 15 A ≤ i ≤ 25 A., densité de courant (I/A) : 1 A./dm² ≤ I/A ≤ 5 A/dm² et consommation ( C) 15 Wh/l ≤ C ≤ 25 Wh/l, l'émulsion devenant instable, ce qui permet que soit retirée l'huile flottante;
b) en rajoutant au liquide restant, du chlorure de fer Cl₂Fe en quantité de 1 à 3 g/l et en le soumettant, au moyen de deux électrodes, à un courant de tension (V): 9 ≤ V ≤ 14 v, densité de courant (I/A) ≥ 4 A./dm² et consommation (C):60 Wh/l ≤ C ≤ 100 Wh/l, en obtenant ainsi un pH final de pH ≤ 3 ou pH ≥ 10, pour procéder à
c) son alcalinisation pour arriver à un pH de 8 ≤ pH ≤ 9 grâce à quoi on obtient un précipité fangeux qui est retiré et de l'eau légèrement polluée par de l'huile et des composés organiques.

## Patentansprüche

1. Verfahren fiir die Aufbereitung von gebrauchten und Wasserund Öl-Emulsionen sowie eine Dissolution von Wasser und organischen Mischungen enthaltenden Kühlölen, **dadurch gekennzeichnet, dass** die folgenden Phasen durchlaufen werden:
a) Zu dem Kühlöl wird ein Alkali oder eine Säure so lange zugegeben, bis ein ph_Wert pH ≤ 3 bzw. pH ≥ 10 erreicht wird, und anschliessend wird mit Hilfe von zwei Elektroden eine Stromspannung (V) angelegt: 10 v ≤ V ≤ 20v Stromstärke (i): 15A ≤ i ≤ 25A, Stromdichte (I/A): 1 A/dm² ≤ I/A ≤ 5 A/dm², Verbrauch (C): 15 Wh/l ≤ C ≤ 25 Wh/l, wodurch die Emulsion unstabil wird und das aufschwimmende Öl abgeschöpft werden kann.
b) Zu der verbleibenden Restflüssigkeit wird Eisenchlorid Cl₂Fe in einer Menge von 1 bis 3 g/l zugegeben und es wird erneut mit Hilfe von zwei Elektroden eine elektrische Spannung (V) eingeleitet: 9 ≤ V ≤ 14 v, Stromdichte (I/A): ≥ 4 A/dm² Verbrauch (C): 60 Wh/l ≤ C ≤ 100 Wh/l, womit ein ph-Endwert von pH ≤ 3 bzw. pH ≥ 10 erreicht wird, womit im nächsten Schritt:
c) eine Alkalisierung zum Erreichen eines ph-Werts von 8 ≤ pH ≤ 9 stattfinden kann. Dank dieses ph-Werts bildet sich ein schlammartiger Bodensatz, der abgezogen wird, sowie leicht mit Öl und organischen Gemischen verunreinigtes Wasser.

## Claims

1. Procedure for treating used cooling oils that contain an emulsion of water and oil and a solution of water and organic compounds, which is **characterised by** the fact that it is comprised of the following consecutive phases:
a) an alkali or an acid is added to the cooling oil in order to obtain a pH of: pH ≤ 3 or pH ≥ 10, and submitting it, by means of two electrodes, to a voltage current (V): 10 v ≤ V ≤ 20v intensity (i): 15A ≤ i ≤ 25A, current density (I/A): 1 A/dm² ≤ I/A ≤ 5 A/dm² and consumption (C) 15 Wh/l ≤ C ≤ 25 Wh/l, making the emulsion unstable, which enables the removal of the floating oil;
b) adding iron chloride Cl₂Fe to the remaining liquid in a quantity of 1 to 3 g/l and submitting it, by means of two electrodes, to a voltage current (V): 9 ≤ V ≤ 14 v, current density (I/A) ≥ 4 A/dm² and consumption (C): 60 Wh/l ≤ C ≤ 100 Wh/l, thus obtaining a final pH of pH ≤ 3 or pH ≥ 10, in order to proceed to:
c) its alkalinisation to reach a pH of 8 ≤ pH ≤ 9 thanks to which a muddy precipitate is obtained, which is removed and water slightly contaminated by the oil and organic compounds.
